# EUROPEAN PATENT APPLICATION

(11) **EP 1 953 965 A1**
(43) Date of publication of application: **06.08.2008**
(21) Application number: 07425061.4
(22) Date of filing: 05.02.2007
(51) Int. Cl.: H04L 12/28, H04L 12/56, H04Q 7/38

(54) **Method of negotiation of access network services between network elements operating according to the same or different access technologies**

(71) Applicant: Siemens Networks S.p.A., 20126 Milano (IT)
(72) Inventor: Meago, Francesco, 23100 Sondrio (IT)

(57) **Abstract**

A method is described to negotiate access network services between endpoints of the so-called Ambient Networks characterized by Ambient Control Space and Connectivity at the interfaces with other networks to exchange information about services and available resources. A Network Element AN1 sends a Discovery message to another Network Element AN2, either of the same or different access technology, in order to request its capability to provide an access network service to NE1. AN2 replies with an Advertising message including one or more of the following Information Elements: Access Discoverer, Access Advertiser, Access Selector, Proxy for Advertising, Access Provider, DS Maintainer, Load Manager and Access Broker. If the requested service is included in the capabilities indicated in the Advertising message, NE1 sends a Setup message to NE2 for provision of the service to the requester. AN2 accepts provision of this service with a reply message of ACK. Successively NE1 intends to modify some characteristics of the negotiated access network service, for example because a new device with a different RAT has been included, so it sends a Modify message to NE2 with the relevant changes. If the requested modification is supported by NE2, it replies with an ACK message, otherwise with a NACK message. In case NE1 decides to stop the transferred service, it sends a Teardown message to NE2 specifying the service to be stopped. NE2 replies with ACK and ceases to provide this service to NE1 (fig.5).

## Description

### FIELD OF THE INVENTION

The present invention relates to the field of communication networks, and more precisely to a method of negotiation of access network services between network elements characterised by the same or different access technologies.

### BACKGROUND ART

**IST-2002-507134-AN/ WP2/D02,** Version 1.0, dated 2005-02-17, titled: "D2-2 MRA Architecture", published in the ambit of Sixth Framework Program on WWI Ambient Networks (AN), describes the background for the present invention (a useful Terminology is reported at the end of the description). The IST AN project aims to define a beyond-3G playground of future-proof networking mechanisms able to cope with a variety of interesting and diverse business scenarios where today's and future networks coexist and interoperate in a multi-access, multi-hop, multi-domain, multi-operator, user-centric environment that is capable to support a variety of services including unicast as well as multicast/broadcast services. Next **figures 1** to **3** are extracted from this document (called Ref.D2-2 hereafter). In substantial accordance with Ref.D2-2, paragraph 2.2, and in refinement and addition to it, the following definitions apply in the scope of this document.

**Definitions related to the Ambient Networks project:**
- **Ambient Network (AN):** an Ambient Network is a collection of nodes and/or devices, which expose their communication resources to User/other Ambient Networks in a controlled way through a well defined external interface, namely the Ambient Network Interface (ANI). Ambient Networks can compose, whereby the combination of their resources is made available through the ANI. An AN can execute AN Service agreements.
- **Ambient Network domain:** A set of nodes and/or devices related to a certain authority with particular AN functionality/roles such that it can establish AN service agreement with other AN domains, on behalf of all or certain parts of the domain. An AN domain is governed by the one authority (owner).
- **Generic Link Layer (GLL):** Generic functions which enable and facilitate efficient link-layer interworking among multiple, possibly diverse, radio accesses.
- **Multi-Radio Access Architecture:** Architecture that supports the use of several radio access technologies.
- **Multi-Radio Resource Management (MRRM):** Generic functionality for the management of one or multiple radio accesses.
- **Radio Access (RA):** A typical, basic radio access is a direct wireless link between two communication entities characterized by a given radio access technology and an associated provider. In general, a radio access may consist of multiple basic radio accesses, combined in parallel and/or multi-hop fashion, and thus possibly consist of different radio access technologies and providers.
- **Radio Access Technology (RAT):** Any wireless technology. It can be an already defined (legacy radio access technology, like: GSM, UMTS, EDGE, GPRS, Bluetooth, HiperLAN, IEEE 802.16, IEEE 802.11, ...) or future access technology.
- **Multicast/Broadcast:** Transmission towards more than one destination.

### Definitions that apply in particular to the matter of the invention:

- **Network Element (NE):** any device, terminal, router, access network controller, access point, etc. which can be part of a network.
- **Network:** is a generic term indicating one or more interconnected network elements, e.g.: interconnected terminals, PAN, WLAN, cellular access networks, etc. This definition is equivalent to "Ambient Network".
- **Access network:** is the access part of a network.
- **Access network services:** are services or functions of relevance for a generic access network, e.g. admission control, access selection.
- **Network Element services (NE services):** the same as Access network services, although in principle extending beyond the services of relevance for the access part of a network.
- **Endpoint:** Point of attachment to a Network Element (NE). One NE may be characterised by more than one endpoint.

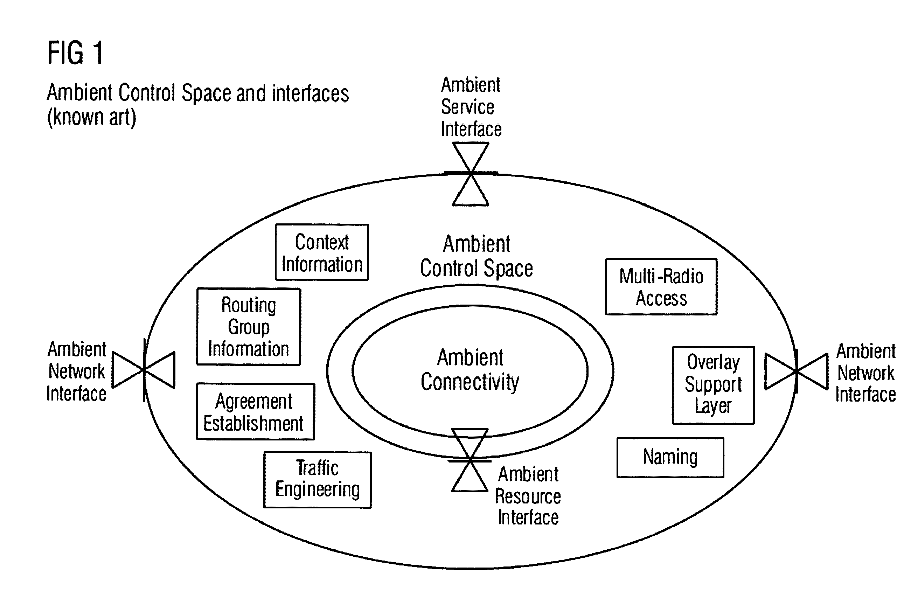

**Fig.1** schematizes a typical Ambient Network (AN) scenario characterised by a control plane, called Ambient Control Space (ACS), and an Ambient Connectivity (ACY) functionality. The ACS includes a number of functionalities capable of managing Multi-radio Access, Context information, mobility, security and even more. The ACS includes interfaces towards the higher layers of control functionality, such as user applications through the Ambient Service Interface (ASI), and also includes the Ambient Resource Interface (ARI) towards the ACY, i.e. the lower layers of control functionality. ANs and their respective ACSs interact through the Ambient Network Interface (ANI). ASI, ARI and ANI are logical interfaces that may run over heterogeneous communication means and access technologies.

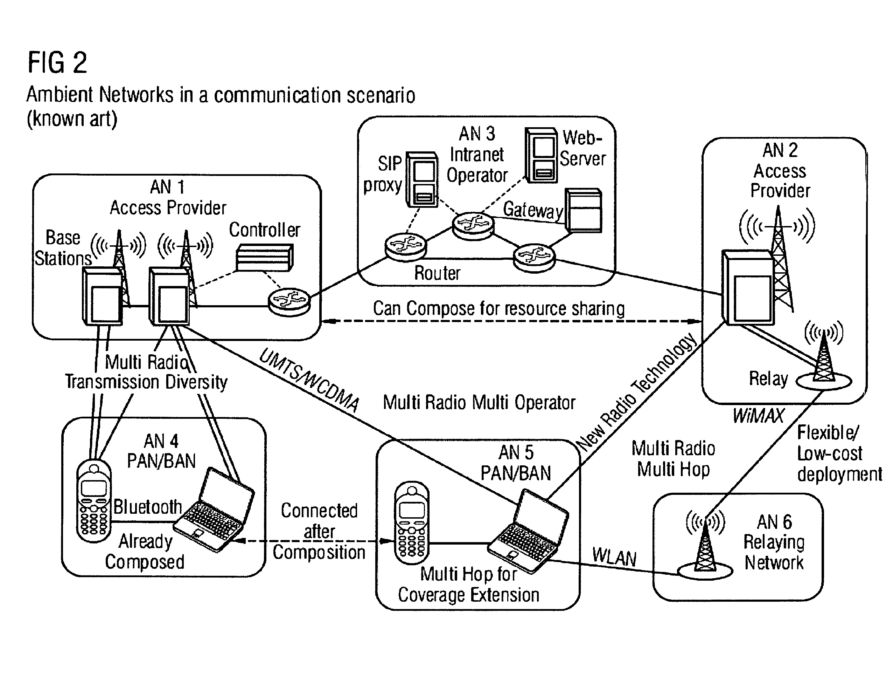

**Fig.2** illustrates different ANs (AN1 to AN6) in a communication scenario. Solid lines represent access technologies spanning from wired lines to various radio access technologies. Dotted lines represent relationships established between ANs. With reference to **fig.2**, an Access Provider Network AN1 includes some Base Stations connected to a Controller (e.g.: BSC, RNC, etc.) and to a Router (e.g.: IP Router). A PAN/BAN AN4 includes TEs/UEs connected to each other by a Bluetooth link, and to the AN1's Base Stations through several access technologies using Multi-Radio Transmission Diversity (MRTD). PAN/BAN AN5 includes TEs/UEs connected to each other in such a way that one terminal currently out of coverage can still connect to the access providers through a multi-hop link via the other terminal, which happens to be under coverage of two access providers using different access technologies, therefore realising coverage extension through multi-hop. Not only, AN5 can exploit multi-radio multi-operator operations, thanks to the connection to different access providers. An IP Router inside AN1 is connected via terrestrial link (optical link) to an IP Router inside Intranet AN3, which is a content provider. AN3 further includes SIP Proxy, Web Server and Gateway interconnected by means of IP Routers. Network AN2 includes a Base Station respectively connected to: a Router of AN3, UE/TE inside AN5 via New Radio Technology (WINNER), and an internal Relay node. The latter is connected through a WiMAX link to a Relay Network AN6, which provides coverage extension in a flexible and low-cost manner. AN6 is further connected to the UE/TE of AN5 by a WLAN link. As a result, AN5 is connected to AN2 through multi-radio multi-hop routes.

**Fig.2** is a high-level view of the role and example capabilities of the Multi Radio Access (MRA). Basic types of composition are shown, e.g. ANs of different access providers can compose in order to enable resource sharing. Composition also allows for dynamic agreements between end-users, new types of access providers even including end-users themselves, thereby allowing for new ways of cooperation including new business roles.

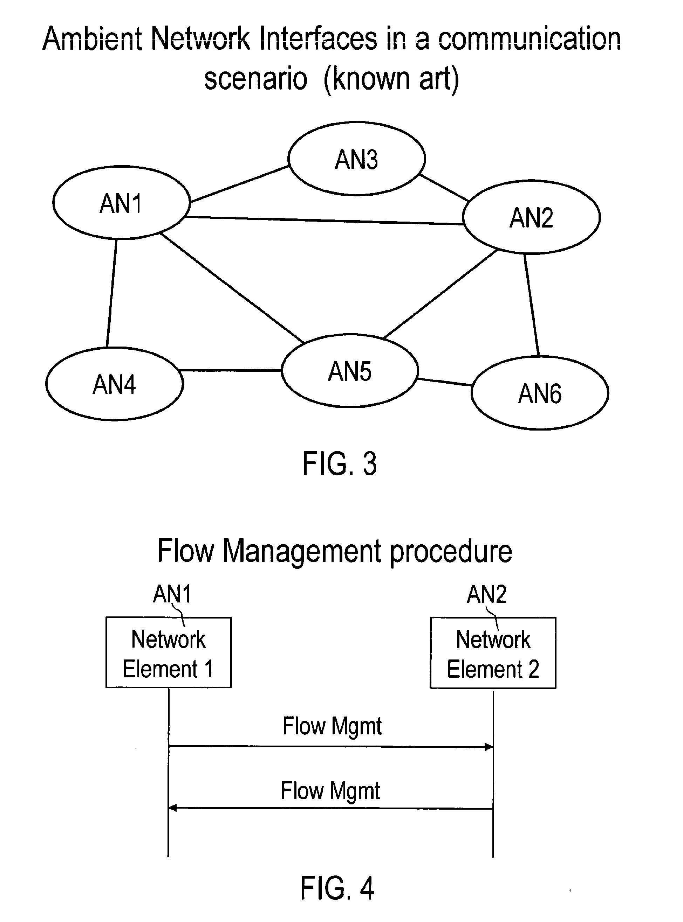

In **fig.3****,** ANI interfaces of the **fig.2** scenario are shown. ANI may exist between two ANs that do not have a direct connection between them (e.g. AN4 - AN5). Also, one single ANI may exist between different ANs that have more than one connection between them (AN1 - AN4). With reference to **fig.3****,** every network or communicating entity is an AN as far as it implements an ACS. The ANI is designed to support communication between different ANs, therefore between operator and user, service provider and user, different user devices, different devices within a local network, different operators, different service providers and so forth. The communication means and access technologies that are actually used for communication may be different: one main function of the ACS is to handle the underlying multiple-access infrastructure in an optimal way, allowing for improved system throughput, enhanced connectivity and user QoS experience.

In operation, according to the preceding figures and Ref.D2-2 paragraph 4.2, the MRA architecture consists of two main components: namely MRRM and GLL with functionality and mechanisms to optimise the utilization of radio resources in the connectivity layers ACY below the ARI. The design of the MRRM and GLL functionality and interfaces is a trade-off between high level management of the load and the aggregate resources and the instantaneous adaptation to specific link layer status. The MRA architecture must provide a smooth interface to IP and transport layer to better support the IP and reduce the end-to-end round trip time while minimizing the signalling overhead within the ACS of stand-alone as well as composed ANs. The basic split of functionality and mechanisms is considered in MRRM and GLL. More in particular:
- MRRM is responsible for joint management of radio resources and load distribution between the different Radio Accesses (RA). This includes the initial assignment of one or several RAs to a particular user connection, as well as further changes in this assignment. MRRM decisions may be based on load of the different RAs, QoS requirements and user preferences, characteristics of the available RAs, reception quality measurements, etc.
- GLL provides unified link layer processing, offering a unified interface towards higher layers and adaptation to the underlying RATs. The GLL is free to establish data transfers to the RAs selected by the MRRM, either sequentially or in parallel. GLL decisions can be based on link state information, QoS requirements and policy rules. GLL also enables efficient multi-hop forwarding of data packets across different RATs.

According to Ref.D2-2 section 6.2: the "MRRM concepts could also be reused and extended to cover fixed accesses for mobile/fixed access convergence."

### OUTLINED TECHNICAL PROBLEM

In current 3G technologies each network element offers either a static access network service, e.g. an RNC will be in charge of controlling the radio access network, a router will be in charge of packet forwarding, etc., or a configurable access network service in the scope of a limited set of technology-specific alternatives, e.g. the network control states of GSM "NC0"/ "NC1"/ "NC2" allowing to configure whether the terminal or the BSC is in charge of cell reselection. Up to now the availability of access network services is not specifically subjected to negotiation but it only depends on the standard architecture of the access network, the relevant MAC, and the amount of deployed resources.

A number of Basic functions for MRRM are described in Ref.D2-2: RA Advertising, RA Discovery, MRRM Negotiation and RA Selection. These functions or services are not themselves subject of negotiation in Ref.D2-2 and due to the early stage of MRRM concept development their scope may be partly overlapping. In conclusion, no methods are currently available for negotiating access network services between generic networks, e.g.: UMTS, GSM, PAN, HAN, WLAN, Bluetooth, fixed networks and composed networks of various types.

### OBJECT OF THE INVENTION

In the effort of developing solutions capable of founding the basis of future 4G communication networks, the issue needs to be solved how to negotiate "access network services" between communicating "networks" through appropriate messaging between respective "network elements". Accordingly, the main object of the present invention is that to overcome the limitation of the actual networks about the negotiation of access network services between generic network elements.

The new negotiation capability would allow for new networking scenarios where networks can fully interoperate and coordinate their different access technologies through coordinated access network services. The new negotiation capability is therefore needed in the perspective of a 4G networking vision based on access network convergence and integration. Examples could include:
- a Personal Area Network including different devices of a same user could include a function for coordinating access selection throughout the whole PAN, always selecting the best available access in the PAN for the given communication needs.
- The access networks of two different operators could dynamically negotiate whether they could make access selection on each other's resources for cooperation purposes under particular traffic conditions.

### SUMMARY OF THE INVENTION

The invention achieves said object by providing a method for enabling the access to a generic telecommunication network by network elements of the same or different access network technologies including a negotiation between the network elements about the capability to provide at least an access network service to other network elements, as disclosed in claim 1.

According to the invention, the method includes at least the following negotiation steps:
a) (optional) sending a Discovery message from a first network element to at least a second network element including a request about the capability of the second network element to provide a specified access network service to the first network element;
b) sending an Advertising message from the second network element to the first network element including information about its own capabilities to provide access network services;
c) sending a Setup message from the first network element to the second network element for enabling the provision by the latter of the requested service.

According to the invention, said access network services subjected to negotiation include one or more of the following: Access Discoverer, Access Advertiser, Access Selector, Proxy For Advertising, Access Provider, Detected Set (DS) Maintainer, Load Manager, Access Broker. The meaning of these capabilities will be detailed in the description of the exemplary embodiment of the invention.

According to the invention, said access network service capabilities are associated to relevant Information Elements (IE) included in a Flow Management tree structure.

According to the invention, said negotiation further includes the step of sending by the first network element to the second network element a Modify message including modifications of the access network service to be provided to the first network element by the second network element.

According to the invention, said negotiation further includes the step of sending by the first network element to the second network element a Teardown message to stop performing the assigned service.

Profitably, the "Access Advertiser" and "Access Discoverer" services allow for centralisation of related signalling, therefore leading to power savings.

Profitably, the "Access Selector" service and its subclasses allow for negotiation of this service for a number of relevant scenarios from cooperation to competition between access providers, to multi-hop community scenarios.

The following are examples of usage of the described negotiation mechanisms allowed by the present invention: with respect to access selection and to the corresponding service of Access Selector, respective roles assumed by two network elements may be:
- competitive: Access Selector service implemented independently in each NE on the separated resource of each NE respectively;
- cooperative: Access Selector service implemented mutually in each NE on the joint resource of both NEs;
- fully hierarchical: Access Selector service in NE A can perform access selection on the total set of resources of NE B, but not viceversa;
- partially hierarchical: Access Selector service in NE A can perform access selection on a constrained set of resources of NE B. The constrained set of resources may be characterised by the fact that it does not extend to the total set of resources, or by the fact that other NEs are also allowed to perform access selection over the same resources according to some policies.
Therefore a negotiation may be subject to several conditions, limitations or policies. Also, the negotiation may be subject to the state of the network elements (idle/connected mode). Examples:
- Two network elements may agree on performing access selection mutually on each other resources.
- A network element may offer to make access selection on its own resources in front of an economic return or a return in terms of credits, possibly with limitations on the preemption capability of access selection (if the data transfer is established it may or may not be turned down by own needs).
- Access selection may be negotiated and delegated as far as a policy will be complied (e.g. on costs of phone calls etc.).

The description of Access Network services could be further detailed, e.g. by adding information on the domain over which a given service applies, and/or by adding further characteristics.

It should also be possible to discriminate between capability and availability of Access Network services within network elements, meaning that although a network element may be capable of providing a certain Access Network service, the same service may not currently be available for some reason.

### BRIEF DESCRIPTION OF THE DRAWINGS

The features of the present invention which are considered to be novel are set forth with particularity in the appended claims. The invention and its advantages may be understood with reference to the following detailed description of an embodiment thereof taken in conjunction with the accompanying drawings given for purely non-limiting explanatory purposes and wherein:
- **fig.1****,** already described, shows an Ambient Control Space and Connectivity diagram of the so-called Ambient Networks;
- **fig.2****,** already described, shows an exemplary Ambient Network scenario;
- **fig.3****,** already described, highlights interfacing undergoing the Ambient Network scenario of **fig.2**;
- **fig.4** shows the basic message sequence chart of the flow management procedure subject of the method of the invention;
- **fig.5** shows a message sequence chart referable to the access network service negotiation according to the method of the present invention;
- **fig.6** shows the first level (root) of a tree structure that encompasses all Information Elements included in the messages used by the flow management protocol of **fig.4**;
- **figures 7** to **10** show successive levels of the Information Element tree, where in particular the level represented in **fig.10** includes those Information Elements used in the negotiation example of **fig.5****.**

### DETAILED DESCRIPTION OF AN EMBODIMENT OF THE INVENTION

Based on a flow abstraction that abstracts all networking resources including nodes, links and their services, we provide here a messaging for the internetworking layer (ACS) of 4G communication networks.

The flow abstraction is here defined as the abstraction of all resources lying below the ACS and used by the ACS, therefore constituting the main building block for ACS operations. Also, for transport services and data transfers we define a flow abstraction not necessarily based on packets, but based on an abstract stream of data that is transported between NEs. The goal is to design a messaging in the easiest possible manner and with a maximum degree of homogeneity for procedures and messages, achieving very low RTT while being efficient in terms of messaging overhead and computational power.

A general description of interface based on the above assumptions is here described. The intention is to provide an interface description that can be applicable to any ACS interface based on the same flow abstraction.

For the general description of interface we simply envisage a Flow Management Procedure, including:
- Flow discovery / request / reservation / setup / reconfiguration / suspend / resume, including:
   o queries on abstracted nodes (NE capabilities information, location information, NE services, ...) and
   o queries on abstracted links, paths and data transfers (requests for transport services, resource reservation, measurements, ...)
- Flow advertising / response, including:
   o Reports on abstracted nodes (NE capabilities information, location information, NE services, ...), and
   o Reports on abstracted links, paths and data transfers (available transport services, measurements, failures, ...).
   Advertisements/responses can be required on request, periodically, on modification or based on particular events.

### Flow Management Procedure

The flow abstraction is here defined homogeneously as an ACS abstraction of connectivity-layer abstractions (resources) such as nodes, links, paths and data transfers. Therefore it should be stressed that the term "flow" when used by itself, or in the wording "flow identifier" or "Flow ID", or in the wording "flow abstraction" does not refer to its classical meaning, but according to the definition above. Flow Management can therefore be involved in the negotiation of access network services (as a subset of NE services, characterising the abstraction of the nodes of the connectivity layer) and communication services (characterising the abstraction of the links, paths and data transfers of the connectivity layer).

Every negotiated information can then be stored and maintained within NEs in appropriate databases (including Composition Agreements), with potential reference to the respective messages used for the negotiation.

The Flow Management procedure and the related flow abstraction is the same for each ACS interface. However, depending on specific NE services and functions, only the relevant subset of information elements and messages will be exchanged within the actual negotiation between specific NEs through the Flow Management procedure. Likewise, within a specific negotiation between NEs the flow abstraction that is matter of the negotiation (e.g. NE services) will likely only represent a subset of the resource that the flow abstraction can represent in general (e.g. NE services, transport services, ...), with varying degree of complexity (NE identifier, NE services, NE service characteristics, ...).

In other words, the Flow Management procedure and the related flow abstraction are designed to be the common networking language that every NE should speak and handle within 4G communication and internetworking scenarios.

An example of Flow Management procedure carried out between two Network Elements is illustrated in **Fig.4**. Without limitation, the two Network Elements engaged in the end-to-end Flow Mgmt (Management) procedure are the ones indicated with AN1 and AN2 in **fig.2**. The procedure is extremely simple from a procedural viewpoint: because the same message structure is used in all cases, for query and report messages, discovery/advertising, setup/modify/teardown and negotiation of NE capabilities and services. This way, Flow Mgmt messages become pure signalling data of a signalling plane that relies on a totally separated transport plane, in line with GANS and NSIS recommendations. Through homogeneity of messages, we maximise the possibility to aggregate functionality within the same message, while simplifying protocols and related algorithms: one message could carry both a discovery and setup request, while another message could carry both an ACK and an advertisement.

With such an approach the interpretation of the single message will clearly be more complex due to the amount of information that Flow Mgmt could potentially carry in the most complex cases, but this can be handled as far as the meaning of the single messages are clearly specified. During message exchange, NE capabilities and services can be discovered, advertised and negotiated, forming a constituent part of the so called process of composition and composition maintenance. Also, this message exchange allows discovering, advertising, setup and manages transport services or communication services in more general.

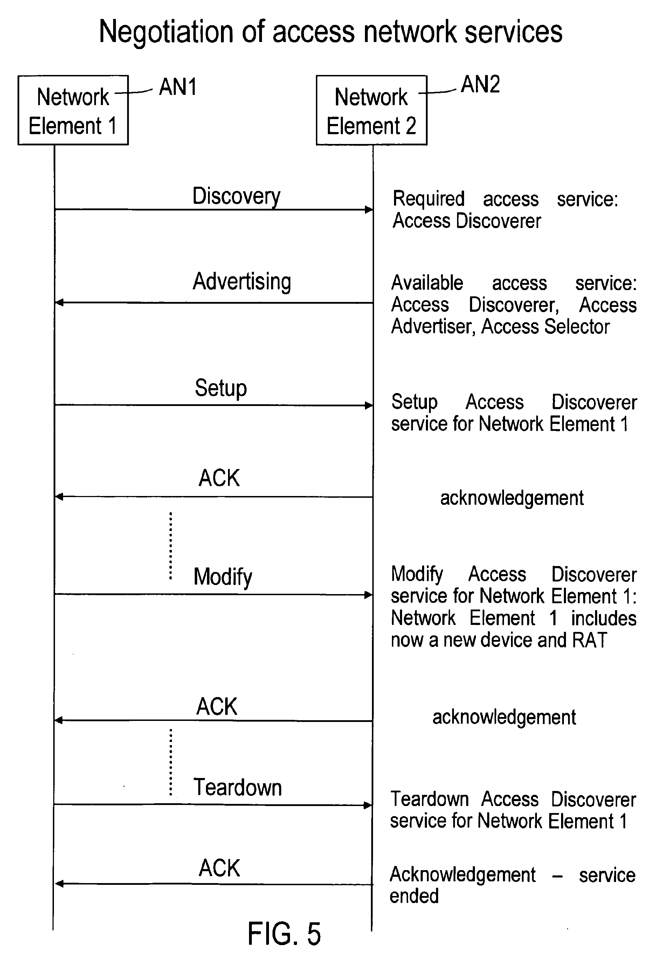

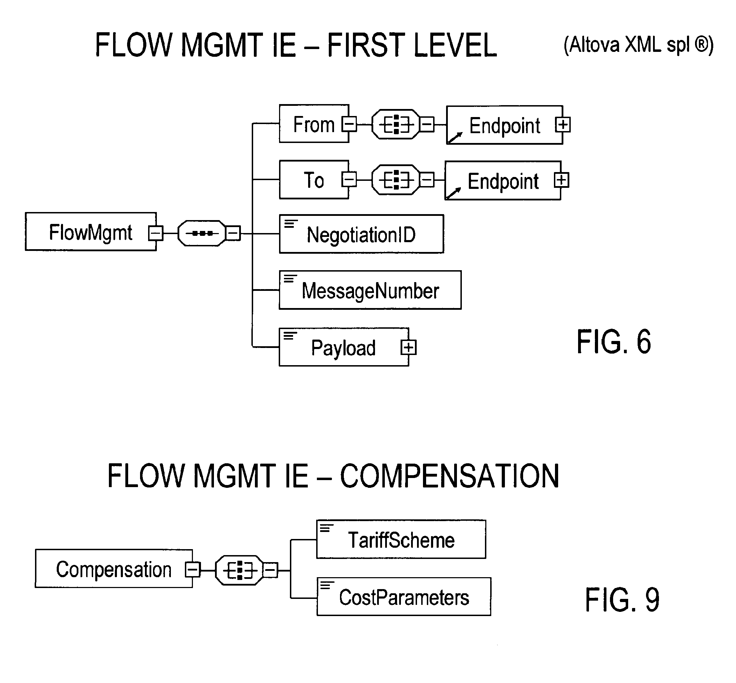

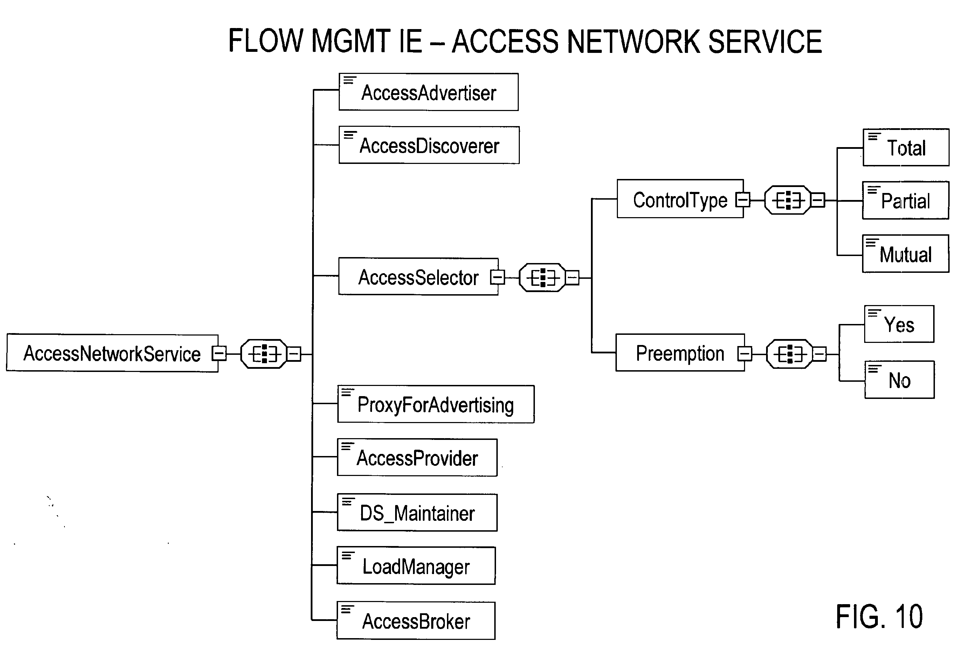

**Fig.5** illustrates an exemplary message sequence chart (time diagram) of the Flow Management of **fig.4** concerning the access network service negotiation procedure of the present invention. This example implements: capability discovery and service negotiation including setup, modify and teardown. All messages used to implement Flow Management procedures are derivable form a whole message describable by means of a tree structure of hierarchical Information Elements departing from a root called **FlowMgmt.** All component IEs of a certain interest are reported in the successive **figures 6** to **10****,** drawn based on well known Altova XMLSpy description tool. The negotiation procedure of **fig.5** makes use of messages based on the FlowMgmt level of IEs reported in **fig.10****.** In the successive description the term "Information Element" is often let implicit.

With reference to **fig.5** and **fig.10**, the Network Element AN1 sends a Discovery message to AN2 in order to request its capability to act as Access Discoverer on behalf of other NEs. With reference to the Ambient Network of **fig.3**, we see that AN2 is connected to AN5 and AN6, so that it could provide information on discovered accesses at least in their regards. As a reply at the reception of the Discovery message, or by default as an autonomous process of e.g. broadcasting, AN2 sends AN1 an Advertising message including one or more of the following IEs: Access Discoverer, Access Advertiser and Access Selector. These three IEs constitute a recommended subset of capabilities which negotiation is needed in order to allow acting on behalf of other NEs according to the required and agreed capabilities. Being the capabilities transmitted by AN2 including "Access Discoverer", AN1 sends a Setup message to AN2 to provide this service on behalf of the requester. AN2 accepts to provide the service with a reply message of ACK. Successively AN1 intends to modify some characteristics of the provided Access Discoverer service, for example because a new device with a different RAT has been included, so it sends a Modify message to AN2 with the relevant changes. If the requested modification is supported by AN2, it replies with an ACK message, otherwise with a NACK message. In case AN1 decides to stop the transferred service of Access Discoverer, it sends a Teardown message to AN2. AN2 replies with ACK and ceases to act as Access Discoverer on behalf of AN1. Likewise, other Access network services can be negotiated including: Proxy for Advertising, Access Provider, DS Maintainer, Load Manager and Access Broker, that will be detailed in **fig.10** by respective IEs.

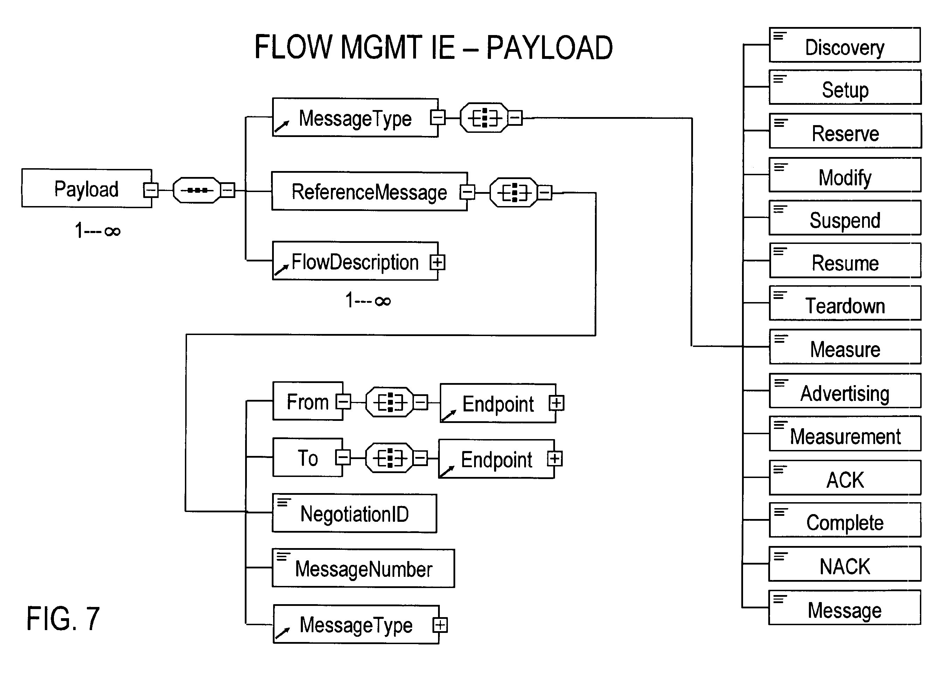

**Fig.6** illustrates the schema of **FlowMgmt** Information Element at the first level of the tree structure (root). With reference to the figure, **FlowMgmt** includes the following IEs:
- **MessageNumber,** provides message numbering within the same negotiation. Even numbers should be reserved to one signalling entity, odd numbers to the other signalling entity (more than one in case of a multicast communication).
- **From,** allows specifying the source network element of the FlowMgmt.
- **To,** allows specifying the destination network element of the FlowMgmt.
   Specification of From and To could happen, for example, only in the first message of a negotiation, or the From field could be specified in the reply messages of a multicast group in order to avoid possible replications on the MessageNumber. More than one network element or the identifier of a group could be specified as destination To of a FlowMgmt, therefore indicating a multicast or broadcast message.
- **NegotiationID,** allows distinguishing which FlowMgmt messages (and MessageNumber) belong to the same thread. In case the NegotiationID is changed, it should be assumed that MessageNumbers and FlowIDs cannot be referenced anymore, while previous knowledge of detected set (the set of all detected access resources) can be preserved.
- **Payload,** allows qualifying the Payload as detailed in **fig.7****.**

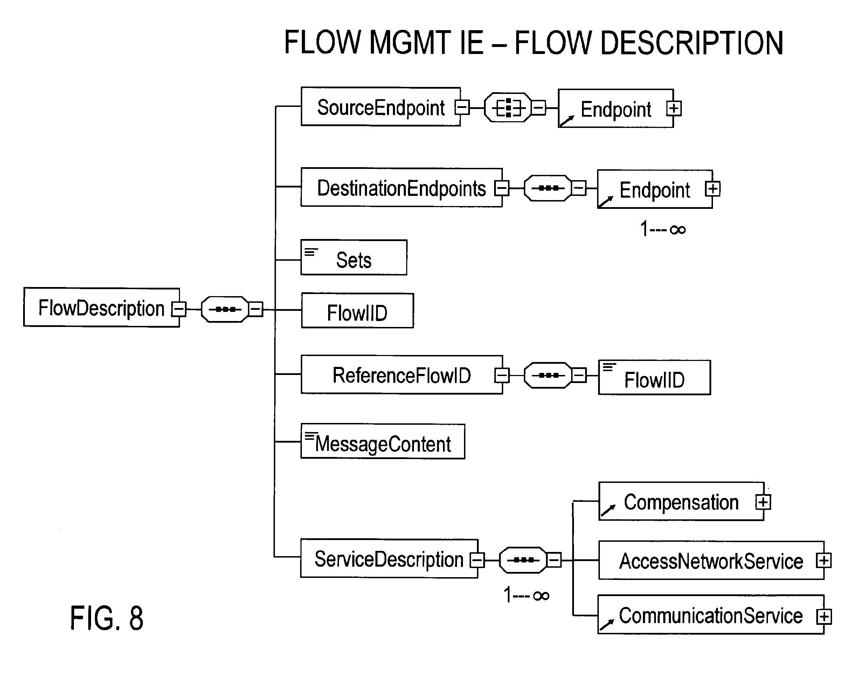

**Fig.7** illustrates the Flow Mgmt **Payload** which contains messages for flow management including:
- **MessageType,** indicating the type of message and therefore discriminating among the set of possible ways to interpret it.
- **ReferenceMessage,** for potentially make explicit reference to a previous message, whose first-level structure of FlowMgmt has been depicted in **fig.6****.**
- **FlowDescription,** describing any issue related with flows within this message. The FlowDescription component is described in **fig.8****.**
In its turn MessageType may include one or more indications among:
- Discovery (of other NEs, NE services or transport services).
- Setup (NE services or transport services).
- Reserve (resources typically for transport services).
- Modify (NE services or transport services including handover).
- Suspend (to temporarily suspend a service).
- Resume (to resume a service that was temporarily suspended).
- Teardown (to stop a service).
- Measure (to require measures).
- Advertising (capabilities including NE services or transport services).
- Measurement (to provide measurements).
- ACK (to acknowledge an action).
- Complete (to inform that an acknowledged action was completed).
- NACK (to unacknowledge an action).
- Message (to provide general purpose messages including warning and error messages).

These MessageTypes, IEs, wherever applicable, could be used in relation to both Access Network Services and CommunicationServices.

The combined use of MessageType(s) allows for example:
- Discovery + Reserve: To reserve a resource immediately if possible. If not possible, it could be implicit to reply with the best offer of similar characteristics.
- Discovery + Setup + Measure: to setup a flow as soon as possible and provide periodical measurements on the average delay.

**Fig.8** illustrates the **FlowDescription** which includes indication of the NE or NEs to which it refers. The following components are included:
- **SourceEndpoint,** used for describing the source endpoint of a flow, or to describe the single endpoint in case the flow would only represent the abstraction of a single endpoint.
- **DestinationEndpoints,** used to describe the one (or more in case of multicast/broadcast) destination endpoint of a flow.

It should be noted that Source and Destination Endpoints in FlowDescription could be different endpoints than the ones exchanging messages in the related negotiation.
- **Sets,** potentially used to reference to a specific set (Detected, Candidate, Active), so that one entity can discover or advertise the detected set of a given endpoint, or the candidate or Active Sets (AS) associated to a given flow.
- **FlowID,** used to identify the flow.
- **ReferenceFlowID,** used to reference to a flow.
- **MessageContent:** to include potential warning/error messages related to the indicated flow.
- **ServiceDescription:** for describing the service implied by the described flow.In its turn ServiceDescription may include:
   - Compensation, describing service-related compensation data, as detailed in **fig.9****.**
   - Network Element Service describing services of the endpoint (Network Element), as detailed in **fig.10** for the only **AccessNetworkService** IE according to the present invention.
   - CommunicationService, describing communication services for the flow in all the details, including transport services and data transfers.

**Fig.9** illustrates the **Compensation** IE which may include indication of a **TariffScheme** and related **CostParameters.** This indication would represent a rough requirement on compensation in discovery messages, an offer in advertising messages.

**Fig.10** illustrates the **AccessNetworkService** (NE Service) specifically embodied in the present invention which may include:
- **AccessAdvertiser,** allows a network element to advertise its capability of being in charge of advertising a given set of accesses through specific means. E.g. within a PAN where two network elements with same RATs exist, it could be decided that only one network element advertises the various accesses of the PAN over those RATs.
- **AccessDiscoverer,** allows a network element to advertise its capability of being in charge of access discovery for a given set of access technologies. E.g. within a PAN where two network elements with same RATs exist, it could be decided that only one network element sends discovery messages for the whole PAN over those RATs, potentially using preconceived knowledge related to this function (policies, previous attempts and historical data, ...).
- **AccessSelector,** allows a network element to advertise its capability of being in charge of access selector over a given domain or set of resources. In its turn AccessSelector is better specified as ControlType and Preemption.
- **ControlType,** including in its turn the components Total, Partial, Mutual. The network element advertising this control type advertises that it offers to perform access selection of this type over the resources of the network element receiving this advertisement. Concerning the further components:
   - Total: exclusive functionality of access selector over the related resources.
   - Partial: non-exclusive functionality of access selector.
   - Mutual: access selection would be done mutually on each other resources.
- **Preemption:** specifying the field Yes or Not it indicates whether access selection would imply preemption over the selected resources.
- **ProxyForAdvertising,** as an additional Access Network Service. By indicating the Access Network Service "ProxyForAdvertising", one network element may advertise its capability to act as a "proxy for advertising". For example, a network element may for some reason be able to keep track of access resources within a region: this network element may offer to proxy advertisements of available access resources towards interested users, without taking part in subsequent access selections and related negotiations.
- **AccessProvider,** as an additional Access Network Service. By indicating the Access Network Service "AccessProvider", one network element may advertise its capability to provide connection towards other networks through own access means. Access providers may be characterized by licensed resource that they own, and/or by particular connectivity that they have towards other networks. Access users for example would normally try to discover access providers with the required characteristics.
- **DS_Maintainer,** as an additional Access Network Service. With the Access Network Service "DS_Maintainer", it can be negotiated which network element keeps track of the Detected Set and serves as a reference point to other entities for retrieving / updating this information when needed.
- **LoadManager,** as an additional Access Network Service. With the Access Network Service "LoadManager", it can be negotiated that a network element provides the service of load manager over a given domain or set of resources. Load has to be intended as mainly due to the traffic throughput which affects the engaged processing resources and the availability of connection resources. Typically, a load-aware access selection should already solve the problem of load management. However, there may be networks requiring a separate load manager. In this latter case the service of load manager would not imply access selection, but the exchange of advertisements for load management purposes. Moreover, the services of load manager and access selector may be required jointly, leading to a load-aware access selection.
- **Access Broker,** as an additional Access Network Service. The Access Network service of "AccessBroker" typically includes a full-package of multi-access functions delegated to this network element by one interested network element. This full-package includes the services of access selector, load manager and DS maintainer. Also compensation-related (or charging) functions may be included.

### TERMINOLOGY

- ACK: Acknowledgement
- ACS: Ambient Control Space
- ACY: Ambient ConnectivitY
- ADSL: Asymmetric Digital Subscriber Line
- AN: Ambient Network
- ANI: Ambient Networks Interface
- ARI: Ambient Resource Interface
- AS: Active Set
- ASI: Ambient Service Interface
- BAN: Body Area Network
- BSC: Base Station Controller
- CA: Composition Agreement
- CRRM: Common Radio Resource Management
- CSD: Circuit Switched Data
- DCCP: Datagram Congestion Control Protocol
- DEEP: Destination Endpoint Exploration Protocol
- DL: Downlink
- DS: Detected Set (the set of all detected access resources)
- ECSD: Enhanced CSD
- E-DEEP: Extended-DEEP
- EDGE: Enhanced Data rates for GSM Evolution
- EGIST: Extended Generic Internet Signalling Transport
- EGPRS: Enhanced GPRS
- FDD: Frequency Division Duplexing
- GANS: Generic Ambient Network Signalling
- GIST: Generic Internet Signalling Transport
- GLL: Generic Link Layer
- GPRS: General Packet Radio Service
- GSM: Global System for Mobile communications
- HCR: High Chip Rate
- HIP: Host Identity Protocol
- HSCSD: High Speed Circuit Switched Data
- HSDPA: High Speed Downlink Packet Access
- HSUPA: High Speed Uplink Packet Access
- HTTP: Hyper Text Transfer Protocol
- IE: Information Element
- IEEE: Institute of Electrical and Electronics Engineers
- ILS: IP Layer Security
- IP: Internet Protocol
- IrDA: Infrared Data Association
- IST: Information Society Technologies
- LAN: Local Area Network
- LCR: Low Chip Rate
- MAC: Medium Access Control
- M/B: Multicast/Broadcast
- MIP: Mobile IP
- MRA: Multi-Radio Access
- MRMH: Multi Route Multi Hop
- MRRM: Multi-Radio Resource Management
- MRRM AS: MRRM Active Set
- MRRM CS: MRRM Candidate Set
- MRRM DS: MRRM Detected Set
- MRoTD: Multi Route Transmission Diversity
- MRTD: Multi Radio Transmission Diversity
- NACK: Not Acknowledged
- PAN: Personal Area Network
- QoS: Quality of Service
- RA: Radio Access
- RAT: Radio Access Technology
- RNC: Radio Network Controller
- RRM: Radio Resource Management
- RTT: Round Trip Time
- SCTP: Stream Control Transmission Protocol
- SIP: Session Initiation Protocol
- TA: Tracking Area
- TCP: Transmission Control Protocol
- TDD: Time Division Duplexing
- TLS: Transport Layer Security
- UDP: User Datagram Protocol
- UE: User Equipment
- UL: Uplink
- UMTS: Universal Mobile Telecommunication System
- USB: Universal Serial Bus
- UT: User Terminal
- UTRAN: Universal Terrestrial Radio Access Network
- WiMAX: Worldwide Interoperability for Microwave Access
- WINNER: Wireless World Initiative New Radio
- WLAN: Wireless Local Area Network
- XML: extensible Markup Language

## Claims

1. Method for enabling the access to a generic telecommunication network (AN1,..., AN6) by network elements of the same or different access network technologies including a negotiation step between the network elements about the capability to provide at least an access network service on behalf of other network elements.

2. The method of claim 1, **characterized in that** includes at least the following negotiation steps:
a) sending an Advertising message from a second network element (AN2) to at least a first network element (AN1) including information about its own capabilities to provide access network services;
b) sending a Setup message from the first network element (AN1) to the second network element (AN2) for enabling the provision by the latter (AN2) of the requested service.

3. The method of claim 2, **characterized in that**, includes a preliminary negotiation step of sending a Discovery message from the first network element (AN1) to at least the second network element (AN2) including a request about the capability of the second network element (AN2) to provide a specified access network service on behalf of the first network element (AN 1);

4. The method of claim 3, **characterized in that** said access network service capabilities subjected to negotiation include the capability of providing the service of Access Discoverer.

5. The method of claim 3, **characterized in that** said access network service capabilities subjected to negotiation includes the capability of providing the service of Access Advertiser.

6. The method of claim 3, **characterized in that** said access network service capabilities subjected to negotiation includes the capability of providing the service of Access Selector.

7. The method of claim 3, **characterized in that** said access network service capabilities subjected to negotiation includes the capability of providing the service of Proxy For Advertising.

8. The method of claim 3, **characterized in that** said access network service capabilities subjected to negotiation includes the capability of providing the service of Access Provider.

9. The method of claim 3, **characterized in that** said access network service capabilities subjected to negotiation includes the capability of providing the service of Detected Set Maintainer.

10. The method of claim 3, **characterized in that** said access network service capabilities subjected to negotiation includes the capability of providing the service of Load Manager.

11. The method of claim 3, **characterized in that** said access network service capabilities subjected to negotiation includes the capability of providing the service of Access Broker.

12. The method of any claim from 1 to 11, **characterized in that** said access network service capabilities are associated to respective Information Elements included in a Flow Management tree structure.

13. The method of any claim from 2 to 12, **characterized in that** the first network element (NE1) sends to the second network element (NE2) a Modify message including modifications of the access network service capabilities of the first network element (NE1).

14. The method of any claim from 2 to 13, **characterized in that** the first network element (NE1) sends to the second network element (NE2) a Teardown message to stop performing the assigned service.
